# EUROPEAN PATENT APPLICATION

(11) **EP 1 808 570 A1**
(43) Date of publication of application: **18.07.2007**
(21) Application number: 07000191.2
(22) Date of filing: 05.01.2007
(51) Int. Cl.: E21B 36/00, E21B 43/30, F24J 3/08

(54) **System for drilling the ground to obtain circulation of fluid in a plant for exploitation of geothermal energy**

(30) Priority: 13.01.2006 IT TO20060021
(71) Applicant: SOILMEC S.p.A., 47023 Cesena, Forli (IT)
(72) Inventor: Trevisani, Davide, 47023 Cesena (FO) (IT)
(74) Representative: Lotti, Giorgio

(57) **Abstract**

A system for high-depth drilling of the ground aimed at reaching hot rocks for extraction of geothermal energy by means of introduction of a heat-conveying fluid and extraction thereof after adequate heating uses just one borehole containing two coaxial tubes: an internal tube(3, 11, 13), through which the cold fluid is introduced, and an external or coating tube (4, 6), through which said fluid returns to the surface after it has been heated by the hot rocks either directly or through said coating tube.

## Description

The present invention relates to the sector of exploitation of geothermal resources for the purpose of production of electrical and heating energy.

More in particular, the invention regards a system for drilling the ground aimed at enabling circulation of fluid in a plant for the exploitation of geothermal energy.

Known to the art is the idea of exploiting the heat of hot dry rocks, which are present over a large part of the Earth's surface at a depth of over three thousand metres. In these rock masses the temperature is between 200°C and 300°C, and there is no presence of water.

For the extraction of heat, it is possible to resort to a conveying fluid such as water, which, however, is to be purposely introduced into the rock mass, heated by contact, and then extracted in the state of superheated water or steam.

Up to now, one approach has been to make boreholes for introduction of the fluid and boreholes for its extraction, between which a continuous circulation of the heat-conveying fluid is set up. This system envisages that the step of heating prevalently occurs during passage from a borehole of the first type to a borehole of the second type, a passage that develops through the natural or artificially induced porosities and cracks in the rock.

The patent application No. RM2002A000521, filed in the name of D'Offizi, describes a first exploitation system by sinking a vertical shaft of a mining type that leads to a network of horizontal galleries within the rock mass. Departing from these galleries are subhorizontal boreholes for introduction and extraction of the circulation water.

The patent application No. T02005A000797, filed in the name of the present applicant, describes a second exploitation system by initially sinking vertical shafts with subsequent deviation in a horizontal direction and multiple branches to widen as much as possible the extension of the area of influence of each individual shaft.

This latter system, which is already much less costly than the former, as compared to the most obvious solution constituted just by vertical shafts with a small stretch within the hot rock achieves two purposes, namely, that of limiting the cost of the vertical passive part of the shaft with respect to the horizontal useful part, and that of limiting the number of vertical shafts and hence the area of the installation on the surface from which the shafts depart.

One purpose of the present invention is to achieve a further considerable limitation of the costs of installation of this latter solution.

A further purpose of the present invention is to enable heat exchange to be ensured even in unfavourable cases, such as the ones in which the natural fracturing of the rocks is very extensive, up to the point where the fluid introduced could dissipate without any possibility of recovery.

In order to achieve the above purposes, the subject of the invention is a system for drilling the ground in order to enable circulation of fluids in a plant for exploitation of geothermal energy according to Claim 1, in which in order to obtain a circulation of fluid just one borehole is used.

A tube must be inserted within the borehole for introduction of the cold fluid, whilst the annular gap between the internal tube and the wall of the borehole is used for extracting the heated fluid, in countercurrent. In order to minimize the heat exchange between the two fluids, the internal tube will be appropriately thermally insulated.

The invention will now be described in two preferred embodiments thereof with reference to the annexed plate of drawings, in which:
- Figure 1 is a side-on profile of the typical borehole for excessively fractured rocks;
- Figure 2 is a top plan view of the same borehole;
- Figure 3 is a side-on profile of the typical borehole for rocks with modest dispersion; and
- Figure 4 is a top plan view of the latter borehole.

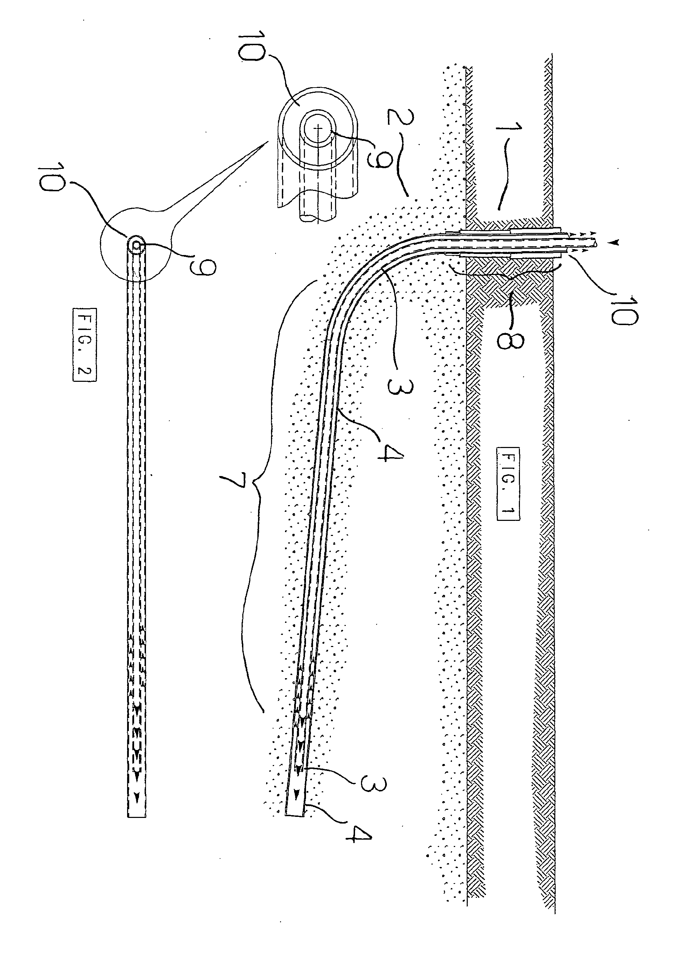

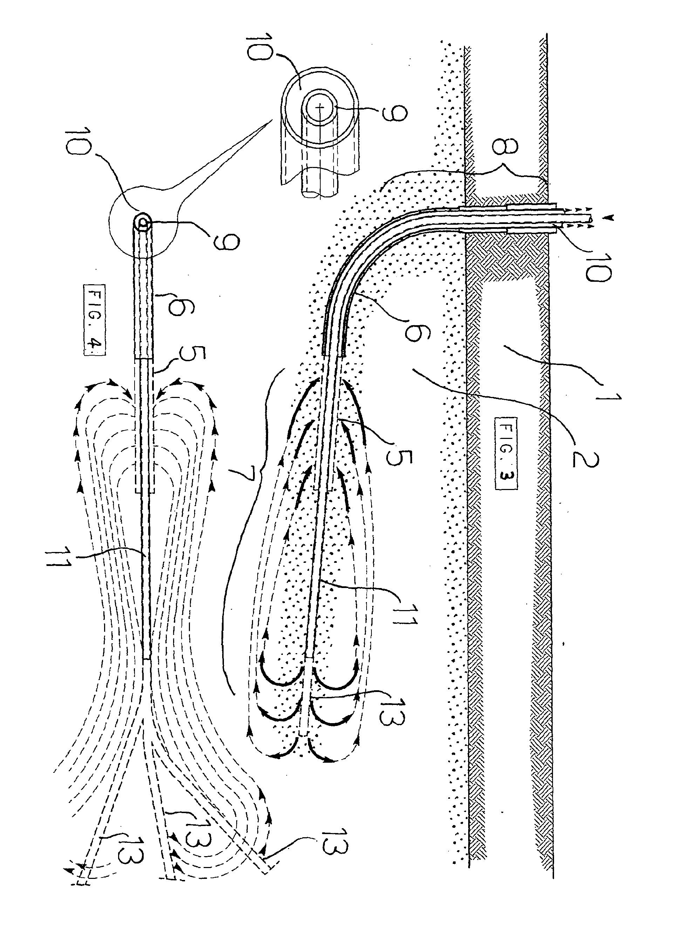

In Figures 1 and 3, the reference number 1 designates the soil and rock cover that is to be traversed in order to reach the bank of hot rock 2.

In excessively fractured ground (see Figures 1 and 2), a borehole of large diameter is drilled, within which a piping made up of two coaxial tubes is inserted. In Figure 1, the reference number 3 designates the internal tube, which is thermally insulated and is designed for the introduction of cold fluid into the rock. The reference number 4 designates the external tube for extraction of the hot fluid, which is cemented and coated.

The hole for return of the hot fluid to the surface carries inside it the stretch of thermally insulated tube 9.

The reference number 7 designates, as a whole, the active area, and the reference number 8 the passive area.

According to the invention, the external coating tube 4 must be closed at the end and must extend throughout the length of the piping. The internal tube 3 for introduction of water terminates at a small distance from the end of the external tube, as may be noted once again in Figure 1.

The arrows of Figure 1 indicate the direction of advance of the fluid which is initially cold and subsequently hot.

In this way, the external wall of the external tube 4 functions as heat-exchange surface directly in contact with the hot rock. Its length in the hot area will have to be as extensive as possible. With the cost of just one borehole it will thus be possible to provide a complete closed circuit for introduction, heating, and extraction of the fluid, preventing any dispersion in the excessively fractured rock.

In ground where the fracturing, whether natural or induced, is not such as to lead to dispersion of fluid, in the active area the heat exchange with the rock is optimized by adopting the solutions described in what follows, illustrated in the embodiment of Figures 3 and 4.

The main borehole of larger diameter is made in the hot rock and provided with the coating 6 in its initial stretch, whilst it remains without any coating for a second stretch 5. Introduced inside said borehole is a battery of rods 11 of smaller diameter, which provides the hole designed for introduction of the fluid.

The complete plant envisages a terminal stretch 13, which extends from the free end of the rods 11, is not coated, and has the purpose of diffusing the cold fluid in the rock, using a large area of contact (see arrows in Figures 3 and 4).

The stretch of rods 11, which is coated, is also thermally insulated and cemented in the borehole. The length of said stretch increases the path that the fluid introduced from the end must follow in order to reach the borehole for return to the surface. Cementing closes the most direct return path, i.e., the one that immediately surrounds the internal tube, which is the less efficient one in terms of heat exchange, since it does not extend into the cracks and porosities.

The stretch of borehole 5 with larger diameter is not instead coated and its purpose is to offer a wide area of collection of the heated fluid.

The rest of the borehole up to exit from the ground is preferably coated to prevent any dispersion of fluid and houses inside it the thermally insulated tube 9 for introduction of the cold fluid. Said stretch starts from the bank of hot rock 2 and arrives at the surface, as has been seen in the case of the first embodiment of Figures 1 and 2.

Indicated with the arrows in Figures 3 and 4 is the preferred direction of circulation of the fluid, but it is understood that said direction of circulation of the fluid can be opposite to the one described by way of example, without thereby altering the characteristics and advantages of the device.

In Figure 4 it may be noted that the internal tube 13 can branch off into a certain number of branches to increase the surface of infiltration of the fluid in the rock.

Finally, it is advantageous for the stretch in contact with the hot rock to be deviated in a nearly horizontal direction to increase the length of path useful for heat exchange, in the case where the hot layer is of small depth.

## Claims

1. A system for high-depth drilling of the ground aimed at reaching hot rocks for extraction of geothermal energy by means of introduction of a heat-conveying fluid and extraction thereof after adequate heating, said system being **characterized in that** just one borehole is used containing two coaxial tubes: an internal tube (3, 11, 13), in which introduction of the cold fluid is carried out, and an external or coating tube (4, 6), along which said fluid returns to the surface after it has been heated by the hot rocks either directly or through said coating tube.

2. The system according to Claim 1, **characterized in that** the internal tube (3) is thermally insulated to minimize passage of heat between the descending fluid and the ascending fluid.

3. The system according to Claim 1, **characterized in that** the external tube (4) is thermally insulated (9) with the exception of the stretch in contact with the hot rock.

4. The system according to Claim 1, **characterized in that** the external tube (4) is closed at the end and extends throughout the length of the piping, whilst the internal tube (3) for introduction of fluid terminates at a small distance from the end of the external tube (4).

5. The system according to any one of the preceding claims, **characterized in that** the fluid returns to the surface inside the external tube (4), after it has been heated by the hot rocks through said tube that is in direct contact with the hot rocks.

6. The system according to Claim 1, applied to fractured rocks in which, however, the dispersion of fluid is small, **characterized in that** the internal tube (13, 11) extends beyond the end of the external tube (6), with a first stretch (11) and a second stretch (13) that is not coated for introduction of the fluid into the fractured rock through said second stretch (13) and its recovery in an area corresponding to the final mouth of the external tube (6).

7. The system according to Claim 6, **characterized in that** the main borehole is drilled inside the hot rock without any coating (6) for a certain stretch (5), beyond which the internal tube (13, 11) extends.

8. The system according to Claim 6, **characterized in that** the stretch of internal tube (11) is cemented to the rock, from where the stretch (5) that is not coated of the main borehole terminates as far as where the second stretch (13) of internal tube starts, to cause return of the heated fluid only through the cracks of the rock up to the aforesaid stretch (5) that is not coated of the main borehole.

9. The system according to Claim 6, **characterized in that** the internal tube (13, 11) is thermally insulated.

10. The system according to Claim 6, **characterized in that** the external tube (6) is thermally insulated.

11. The system according to Claim 6, **characterized in that** the internal tube (13) branches off in a number of branches to increase the surface of infiltration of the fluid in the rock.

12. The system according to the preceding claims, **characterized in that** the stretch of tube in contact with the hot rock is deviated in a nearly horizontal direction to increase the length of path useful for heat exchange in the case where the hot layer is of small depth.
